# EUROPÄISCHE PATENTSCHRIFT

(11) **EP 2 945 721 B1**
(45) Veröffentlichungstag und Bekanntmachung des Hinweises auf die Patenterteilung: **26.06.2019**
(21) Anmeldenummer: 13811786.6
(22) Anmeldetag: 10.12.2013
(51) Int. Cl.: B01D 39/08, B01D 39/16, B01D 39/20

(54) **FILTERMATERIAL, INSBESONDERE VORGESEHEN FÜR HYDRAULISCHE FILTER**
FILTER MATERIAL, WHICH IS PROVIDED IN PARTICULAR FOR HYDRAULIC FILTERS
MATÉRIAU FILTRANT, EN PARTICULIER POUR FILTRES HYDRAULIQUES

(30) Priorität: 19.01.2013 DE 102013000932
(43) Veröffentlichungstag der Anmeldung: 25.11.2015
(73) Patentinhaber: Hydac Filtertechnik GmbH, 66280 Sulzbach/Saar (DE)
(72) Erfinder: SCHWENDER, Matthias, 66459 Kirkel (DE); SCHMITZ, Andreas, 66459 Kirkel (DE); JOCHUM, Stefan, 66557 Hüttigweiler (DE); LANG, Timo, 66540 Neunkirchen (DE)
(74) Vertreter: Bartels und Partner, Patentanwälte
(86) Internationale Anmeldenummer: PCT/EP2013/003723
(87) Internationale Veröffentlichungsnummer: WO 2014/111107

(56) Entgegenhaltungen:
- EP-A1- 0 934 769
- WO-A1-85/00556
- DE-A1-102010 025 217
- DE-A1-102010 025 218

## Beschreibung

Die Erfindung betrifft ein Filtermaterial, insbesondere vorgesehen für hydraulische Filter, mit mindestens einer Lage, umfassend zumindest eine erste Struktur, die Kett- und Schussfäden aufweist, und mindestens eine weitere, zweite Struktur mit vorgebbarer Filtrationseigenschaft.

Filtermaterialien zur Herstellung von austauschbaren Filterelementen in hydraulischen Anlagen sind in mannigfacher Ausgestaltung bekannt. Beispielsweise ist in DE 10 2004 061 078 A1 ein plissiertes oder gefaltetes Filtermaterial offenbart, das Filterfalten aus nebeneinanderliegenden Filterfaltenhälften aufweist. Bei derartigen Filtermaterialien sind als jeweilige erste Strukturen, die als Stützlagen dienen, an einer oder an beiden Seiten (Anström- oder Abströmseite) Gewebe in Form von Kett- und Schussfäden vorgesehen. Diese Stützlagen haben die Aufgabe, das Filtermaterial zu stabilisieren. Beim Durchströmen des Filtermaterials ergeben sich zum Teil beträchtliche Druckdifferenzen zwischen der Rohseite und der Reinseite. Um diesen Druckdifferenzen und auch dynamischen Strömungskräften in dem Unfiltrat standhalten zu können, sind bekannte Stützstrukturen meist aus Metallgeweben, insbesondere Geweben aus Edelstahldrähten, gebildet. Als jeweils zweite Strukturen mit vorgebbarer Filtrationseigenschaft sind eine oder mehrere Filterlagen, beispielsweise aus einem Filtervlies, vorgesehen.

Weitere gattungsgemäße Filtermaterialien gehen aus der DE 10 2010 025 217 A1 und der DE 10 2010 025 218 A1 hervor.

Die EP 0 934 769 A1 beschreibt ein Filtermaterial für einen Filtergurt, bei dem einzelne Schussfäden aus verzwirnten Monofilamenten bestehen.

Ausgehend von diesem Stand der Technik stellt sich die Erfindung die Aufgabe, ein Filtermaterial der betrachteten Art zur Verfügung zu stellen, bei dem die die Abstützfunktion ausübende, jeweilige Struktur durch ein hinsichtlich rationeller Herstellbarkeit und zu fordernden Betriebseigenschaften optimiertes Gewebe gebildet ist.

Erfindungsgemäß ist diese Aufgabe durch ein Filtermaterial gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass der jeweils gezwirnte Faden aus mindestens einem Trägerfaden gebildet ist, mit dem zumindest ein Karbonfaden verzwirnt ist.

In ganz besonders vorteilhafter Weise lassen sich dadurch elektrostatische Probleme vermeiden, wie sie ansonsten bei Geweben aus nichtmetallischen Fäden im Betrieb auftreten können. Insbesondere bei der Durchströmung durch Fluide mit eventuell vorliegender partikulärer Verschmutzung kann es am Filtermaterial zu elektrostatischen Aufladungen kommen. Derart erzeugte Potentialunterschiede innerhalb des Filtermaterials können zu plötzlichen Entladungen führen, wobei es zu Funkenbildung kommen kann. Im Hinblick auf die Brennbarkeit von zu filtrierenden Fluidmedien, wie Hydrauliköl, Kraftstoffe od. dgl., besteht dadurch ein Sicherheitsrisiko. Funkenentladungen können auch zu einer Schädigung des Öls sowie der die Filtrationseigenschaft aufweisenden Strukturen führen. Auch hat sich gezeigt, dass durch elektrostatische Aufladungen von Ölmedien diese schneller altern und im Rahmen der Wartung entsprechend früher zu tauschen sind. Ohne ein metallisches Gewebe, beispielsweise aus Edelstahldrähten bilden zu müssen, lassen sich diese Probleme vermeiden, indem als jeweilige abstützende Struktur ein Gewebe gebildet ist, bei dem gezwirnte Fäden enthalten sind, bei denen wenigstens ein leitfähiger Karbonfaden mit einem betreffenden Trägerfaden verzwirnt ist.

Es ist ferner vorgesehen, dass die jeweilige erste Struktur zumindest teilweise aus Multifilamenten in Form von gezwirnten Fäden gebildet ist. Mit eingewebten gezwirnten Fäden lässt sich ein Gewebe auf Kunststoffbasis rationell und kostengünstig realisieren, das geometrisch wie festigkeitsmäßig besonders günstige Eigenschaften besitzt.

In einer bevorzugten Ausführungsform des erfindungsgemäßen Filtermaterials, wobei die die Abstützfunktion übernehmende erste Struktur durch ein Kunststoffgewebe gebildet ist, kann als Material für den Trägerfaden, der mit zumindest einem Karbonfaden verzwirnt ist, ein Kunststoffmaterial wie Polybutylenterephthalat (PBT), Polypropylen (PP) und/oder Polyethylen (PE) vorgesehen sein. Ein derartiges Kunststoffmaterial kann ebenso für die unverzwirnten Fäden des Gewebes vorgesehen sein. Derartige Kunststoffmaterialien zeichnen sich durch eine mittlere Festigkeit, eine hohe Steifigkeit und Härte aus. Teilkristalline Polyethylenterephthalate (PET) weisen thermische Einsatzgrenzen bei -20 °C bis etwa + 100 °C, kurzzeitig bis +200 °C, auf. Sie sind beständig gegen verdünnte Säuren, aliphatische und aromatische Kohlenwasserstoffe, Öle, Fette, Ester und Alkohole. Polybutylenterephthalat besitzt im Vergleich zu Polyethylenterephthalat eine etwas geringere Festigkeit; seine Einsatzgrenzen liegen etwa bei -40 °C bis +250 °C. Isotaktisches Polypropylen ist bis etwa 150 °C einsetzbar und erweist sich als chemisch sehr beständig.

Hinsichtlich der Gestaltung des Gewebes kann die Anordnung mit Vorteil so getroffen sein, dass Schussfäden und/oder Kettfäden, vorzugsweise ausschließlich Schussfäden, mit Fäden mit Karbonanteil verzwirnt sind.

Bei vorteilhaften Ausführungsbeispielen kann der jeweilige Karbonfaden oder eine entsprechende Anzahl von Karbonfäden, der oder die mit dem zugehörigen Trägerfaden verzwirnt ist bzw. verzwirnt sind, zumindest teilweise karbonhaltige Materialien aufweisen, wobei ein betreffender Faden vorzugsweise mit Karbon beschichtet ist oder, besonders bevorzugt, vollständig aus Karbon besteht.

Bei besonders vorteilhaften Ausführungsbeispielen können die Kett- und Schussfäden des Gewebes in einer vorgebbaren Hintereinanderabfolge von gezwirnten, Karbonmaterialien aufweisenden Fäden oder von nicht gezwirnten ausschließlich aus Karbon bestehenden oder Karbonmaterialien aufweisenden Fäden durchgriffen sein.

Mit besonderem Vorteil kann die Anordnung hierbei so getroffen sein, dass bei der Hintereinanderabfolge die gezwirnten Fäden immer nur den achten Schussfaden des Gewebes betreffen und einen an dieser Stelle an sich vorgesehenen, nicht gezwirnten Schussfaden ersetzen.

Mit Vorteil kann das Gewebe eine Leinwandbindung aufweisen, vorteilhafterweise beispielsweise mit Kettfäden mit einem Durchmesser von 0,3 mm bis 0,35 mm, wobei die Maschenweite der Schussfäden mindestens 0,2 mm, vorzugweise 0,6 mm, betragen kann. Der Durchmesser der Schussfäden kann in einem Bereich von 0,1 mm bis 0,26 mm liegen.

Bei besonders vorteilhaften Ausführungsbeispielen können Kett- und Schussfäden des Gewebes an zumindest einem Teil ihrer Kreuzungsstellen miteinander verbunden sein.

Bei Ausführungsbeispielen, bei denen als zweite Struktur mit vorgebbarer Filtrationseigenschaft ein Filtervlies, etwa ein Polyestervlies, vorgesehen ist, kann das Gewebe mit der durch den jeweiligen Vliesstoff gebildeten zweiten Struktur mittels Laminieren, Kaschieren und/oder mittels eines Aufschmelzverfahrens, wie Ultraschall, verbunden sein. Durch eine, vorzugsweise mittels Ultraschall erfolgende, Verbindung des Gewebes mit dem Vliesstoff der zweiten Struktur können auch die Kett- und Schussfäden an Kreuzungsstellen miteinander verbunden sein. Durch eine gegenseitige Fixierung von Kett- und Schussfäden wird eine Fadenvereinzelung bei der Verarbeitung des Materials (Schneiden, Falten, Handling) vermieden, wodurch die Voraussetzung für eine automatisierte Verarbeitung geschaffen ist.

Gemäß dem Anspruch 13 ist Gegenstand der Erfindung auch ein Filterelement, das ein Filtermaterial gemäß einem der Ansprüche 1 bis 12 aufweist.

Nachstehend ist die Erfindung anhand von in der Zeichnung dargestellten Ausführungsbeispielen im Einzelnen erläutert. Es zeigen:
- Fig. 1: in teilweise aufgeschnittener, schematisch vereinfachter Darstellung den oberen Teil eines Filterelements mit einem Filtermaterial gemäß dem Stand der Technik;
- Fig. 2: eine schematisch vereinfachte und vergrößerte, jedoch, was die Fadenstärken anbelangt, nicht maßstäbliche Draufsicht eines Teilbereichs eines Filtermaterials gemäß einem Ausführungsbeispiel des Standes der Technik;
- Fig. 3: eine stark vergrößert gezeichnete Teildarstellung einer Kreuzungsstelle eines ungezwirnten Fadens und eines verzwirnten Schussfadens in Form eines mit Karbonfäden verzwirnten Trägerfadens; und
- Fig. 4: eine der Fig. 2 ähnliche Teildraufsicht eines zweiten Ausführungsbeispiels des erfindungsgemäßen Filtermaterials.

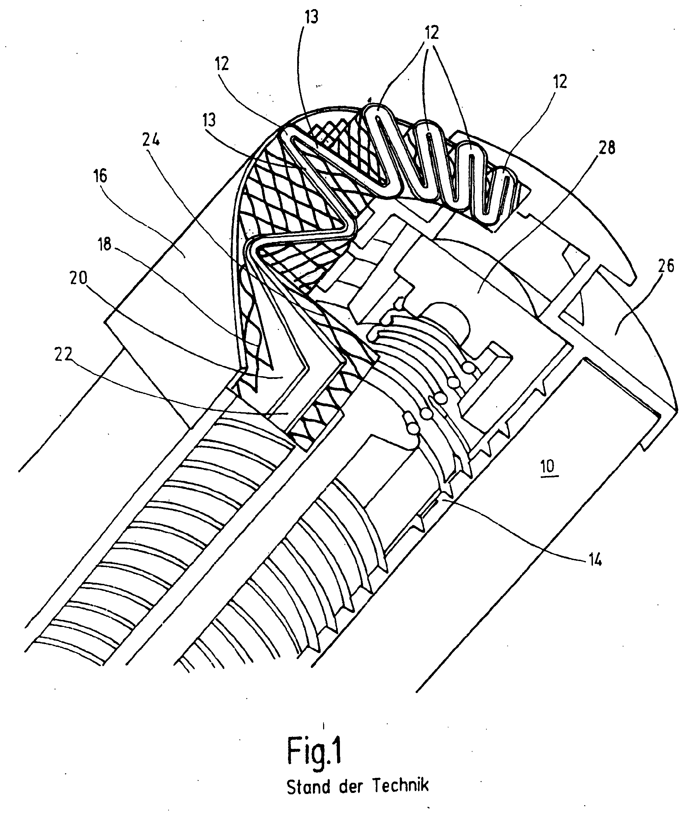

Das in der Fig. 1 teilweise dargestellte Filterelement, wie es zum Stand der Technik zählt, weist als Filtermaterial eine mehrlagige Filtermatte 10 mit einer vorgebbaren Flächenausdehnung und vorgebbaren Filtereigenschaften auf. Die Filtermatte 10 ist, wie in der Fig. 1 dargestellt, plissiert, mit einzelnen Filterfalten 12, die in dichter Packungsfolge sich zwischen einem inneren fluiddurchlässigen Stützrohr 14 sowie zwischen einem äußeren, zylindrischen Gehäusemantel 16 erstrecken, der gleichfalls durchlässig ist. Der besseren Darstellung wegen sind die einzelnen Filterfalten 12, die jeweils aus zwei Filterfaltenhälften 13 (in Fig. 1 nur teilweise beziffert) bestehen, teilweise auseinandergezogen dargestellt, und der Einzellagenaufbau der plissierten Filtermatte 10 ergibt sich aus der dem Betrachter zugewandten Teildarstellung.

Bei derart aufgebauten Filterelementen besteht die Filtermatte 10 üblicherweise aus einer als stützende Struktur dienenden Stützlage 18, einer zweiten Lage 20 als Schutzvlies, einer die Struktur mit Filtrationseigenschaft bilden dritten Lage als Hauptvlies oder Filterlage 22, gegebenenfalls einer weiteren, nicht dargestellten Lage eines sich anschließenden Schutzvlieses und ebenfalls einer vierten Lage als weiterer, innenumfangsseitig verlaufender Stützlage 24 als weitere abstützende Struktur. Die genannten Stützlagen 18, 24 können aus einem Drahtgewebe, einem Kunststoffgitter oder einem Kunststoffgewebe bestehen. Eine dieser Stützlagen 18, 24 dient, zusätzlich zur Abstützfunktion, als Drainagelage. Die Schutzvlieslagen 20 bestehen regelmäßig aus einem Kunststoffvlies, und die Hauptvlies- oder Filterlage 22 besteht aus Materialien wie synthetischem Filtermaterial (Polyestervlies, Melt-blown-Fasern) Zellulosepapier, Glasfaserpapier oder dergleichen. Die genannten Lagen können auch aus sog. Composite-Materialien gleicher oder verschiedener Art aufgebaut sein. In Abhängigkeit vom Lagenaufbau und den jeweils eingesetzten Filtermaterialien weist die Filtermatte 10 vorgebbare Filtereigenschaften auf, die sich an der Filtrationsaufgabe orientieren, wobei grundsätzlich eine hohe Differenzdruckstabilität gewünscht ist, ebenso wie eine hohe Beta-Stabilität über einen zweiten Differenzdruckbereich, sowie vorgebbare Filterfeinheiten, wobei zur Verringerung des Differenzdruckes am Filterelement ausreichend Strömungskanäle zur Verfügung stehen sollen, gleichzeitig jedoch eine gute Widerstandsfähigkeit gegen wechselnde Druckbelastungen gewährleistet sein soll.

In Blickrichtung auf die Fig. 1 gesehen, wird bei dem bekannten Filterelement die Filtermatte 10 von außen nach innen durchströmt und stützt sich innenumfangsseitig mit ihren betreffenden Faltenumlenkungen am Außenumfang des Stützrohres 14 mit seinen ringförmigen Durchlässen ab. Die Filtermattenenden sind jeweils in einer Endkappe aufgenommen, wobei in Fig. 1 nur die obere Endkappe 26 dargestellt ist, die im Übrigen ein federbelastetes Bypassventil 28 umfasst, das aus Sicherheitsgründen einen Fluiddurchlass ermöglicht, auch wenn die Filtermatte 10 von Verschmutzungen zugesetzt ist.

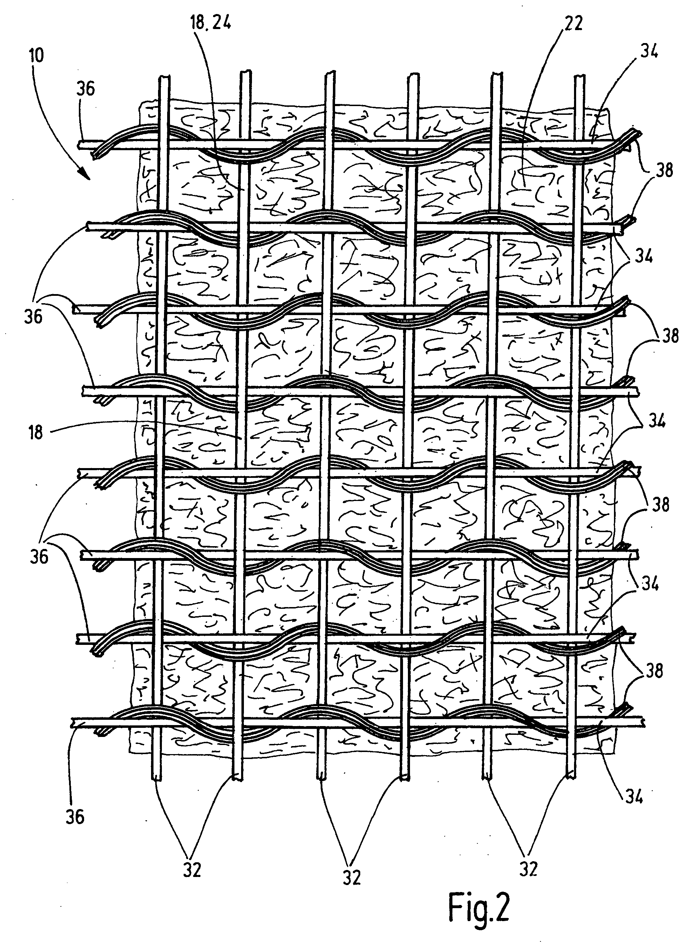

Die Fig. 2 zeigt in schematisch vereinfachter und gegenüber einer praktischen Ausführungsform etwa 10-fach vergrößerter Darstellung einen Teilflächenabschnitt eines Ausführungsbeispiels des erfindungsgemäßen Filtermaterials, wobei von dem gegebenenfalls mehrlagigen Aufbau der betreffenden Filtermatte 10 lediglich eine Stützlage 18 als abstützende, erste Struktur und eine Filterlage 22 als daran anliegende zweite Struktur mit Filtrationseigenschaft sichtbar sind. Als Material der Filterlage 22 ist ein Polyestervlies vorgesehen. Die Stützlage 18 als abstützende, erste Struktur weist ein Gewebe aus Kettfäden 32 und Schussfäden 36 in einer sog. Leinwandbindung auf. Eine Besonderheit des Gewebes besteht darin, dass als Schussfäden 36 Zwirnfäden vorgesehen sind, die jeweils mindestens aus einem Trägerfaden 34 bestehen, mit dem ein Karbonfaden 38 oder mehrere Karbonfäden 38 verzwirnt ist bzw. sind. Die Trägerfäden 34, ebenso wie die unverzwirnten Kettfäden 32 sind aus einem Kunststoffmaterial wie Polybutylenterephthalat, Polypropylen, Polyethylen, Polyethylenterephthalat oder dergleichen oder aus Mischungen dieser Materialien gebildet, wobei Fadendurchmesser von 0,3 mm bis 0,35 mm vorgesehen sind. Bei den mit den Trägerfäden 34 verzwirnten Karbonfäden 38 handelt es sich um, verglichen mit den Trägerfäden 34, dünne Filamente, die vollständig aus Karbon bestehen können oder zumindest teilweise aus karbonhaltigem Material bestehen, beispielsweise durch Beschichtung mit Karbon. Für die Verzwirnung mit den Trägerfäden 34 kann ein einzelner Karbonfaden 38 oder ein Bündel aus Karbonfäden 38 vorgesehen sein.

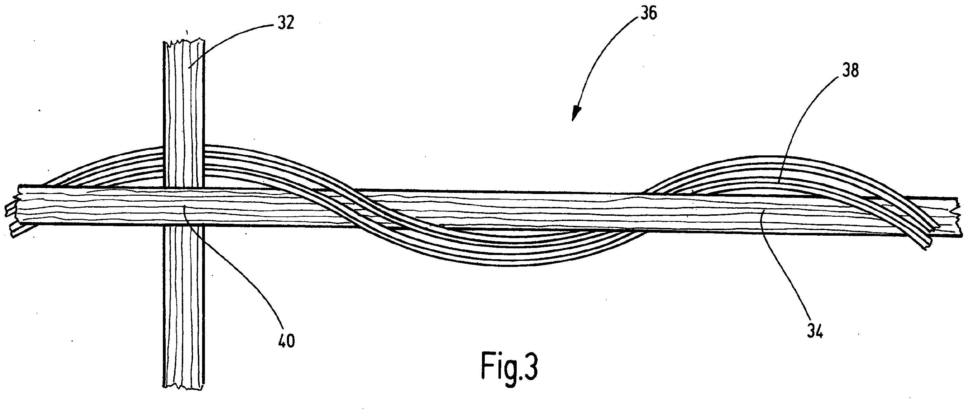

Die Fig. 3 zeigt ein Beispiel eines einzelnen Zwirnschussfadens 36 an einer Kreuzungsstelle 40 mit einem unverzwirnten Kettfaden 32, wobei der Trägerfaden 34 mit einem Bündel aus mehreren Karbonfäden 38 verzwirnt ist.

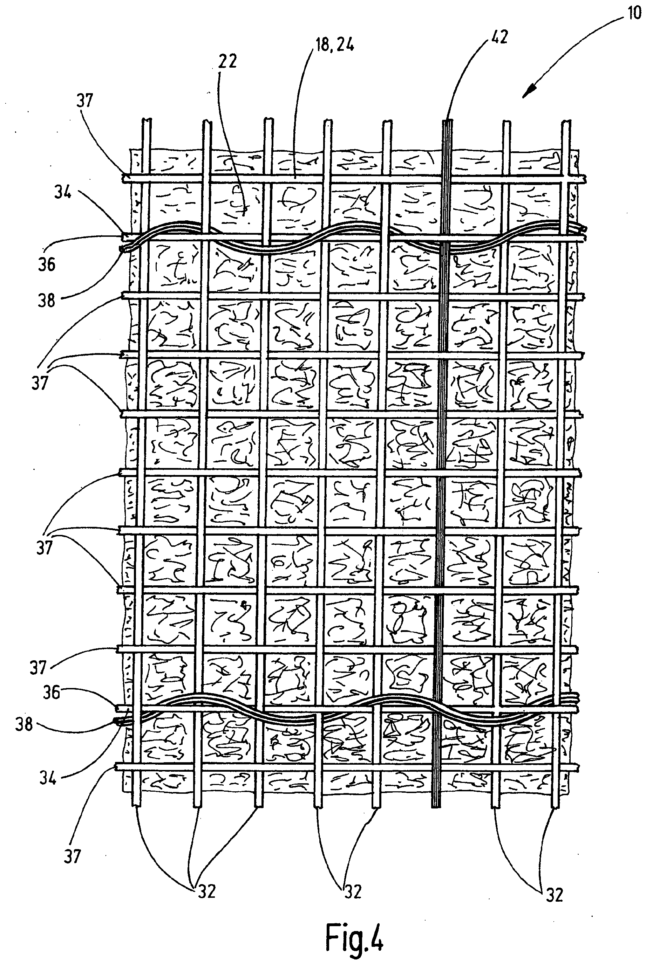

In einer der Fig. 2 ähnlichen Darstellung zeigt Fig. 4 ein abgewandeltes Ausführungsbeispiel, bei dem, wie dies auch beim Beispiel von Fig. 2 der Fall ist, die Kettfäden 32 unverzwirnte Fäden sind. Anders als in Fig. 2 ist jedoch der überwiegende Großteil der Schussfäden durch nicht gezwirnte Fäden 37 gebildet. Wie Fig. 4 zeigt, ist von den ungezwirnten Schussfäden 37 jeweils nur jeder achte durch einen mit Karbonfäden 38 verzwirnten Schussfaden 36 ersetzt. Ein weiterer Unterschied gegenüber dem ersten Ausführungsbeispiel besteht darin, dass das die abstützende erste Struktur 18 bildende Gewebe außer den karbonhaltigen Zwirnschussfäden 36, die jeden achten unverzwirnten Schussfaden 37 ersetzen, auch karbonhaltige Kettfäden 42 aufweist, von denen in Fig. 4 einer sichtbar ist. Bei der Darstellung von Fig. 4 ersetzt der karbonhaltige Kettfaden 42, bei der Zählung von links nach rechts, den sechsten karbonfreien Kettfaden 32. Beim vorliegenden Beispiel ist der karbonhaltige Kettfaden 42 vollständig aus Karbon. Anstelle eines vollständig aus Karbon bestehenden Fadens könnte hier ein karbonhaltiges Fadenmaterial, beispielsweise Kunststoff mit Karbonbeschichtung, vorgesehen sein. Derartige karbonhaltige Kettfäden 42 können in geeigneten Abständen voneinander vorgesehen sein, beispielsweise in Abständen von etwa 2 cm. Bei den in Frage kommenden Maschenweiten von zumindest etwa 26 mm, kann ein derartiger karbonhaltiger Kettfaden 42 beispielsweise jeden 80sten karbonfreien Kettfaden 32 ersetzen.

Bei dem Beispiel von Fig. 2 sind Karbonzwirnfäden als verzwirnte Schussfäden 36 in Kombination mit unverzwirnten Kettfäden 32 vorgesehen. Es könnten jedoch auch die Kettfäden 32 in Form von Karbonzwirnfäden in Kombination mit unverzwirnten, karbonfreien Schussfäden 37 vorgesehen sein, wie sie beim Beispiel von Fig. 4 überwiegend vorhanden sind. Ebenso könnten unverzwirnte karbonhaltige Fäden, wie sie beim Beispiel von Fig. 4 als unverzwirnte Kettfäden 42 vorgesehen sind, auch als im Wechsel angeordnete, unverzwirnte, karbonhaltige Schussfäden in Abständen voneinander angeordnet sein.

Durch die derartig mit karbonhaltigem Material in Form von Multifilamenten und Monofilamenten durchsetzte Struktur hat das Filtermaterial gute elektrostatische Eigenschaften. Für eine Potentialableitung kann mit besonderem Vorteil zumindest eine das Filtermaterial 10 einfassende Endkappe 26 des betreffenden Filterelements, als mit einem metallischen Bauelement einer Filtervorrichtung in Berührung stehendes Bauteil, aus einem elektrisch leitenden Werkstoff gebildet sein, beispielsweise einem leitfähigen Kunststoffmaterial.

Die jeweilige abstützende, erste Struktur in Form der Stützlage 18 und/oder 24 kann mit Vorteil mit der die zweite Struktur bildenden Filterlage 22 verbunden sein, beispielsweise mittels Laminieren, Kaschieren und/oder mittels eines Aufschmelzverfahrens, wie Ultraschall. Auch können im Gewebe die Kett- 32 und Schussfäden 36, 37 an Kreuzungsstellen 40 (Fig. 3) aneinander fixiert sein, beispielsweise ebenfalls mittels Ultraschall. Die Verbindung des Gewebes mit dem betreffenden Filtervlies kann gleichzeitig die Fixierung der Fäden an den Kreuzungsstellen 40 bewirken. Ebenso kann der Vorgang der Fixierung an den Kreuzungsstellen 40 die Verbindung zwischen Gewebe (Stützlage 18, 24) und dem Vliesstoff (Filterlage 22) bilden.

## Patentansprüche

1. Filtermaterial, insbesondere vorgesehen für hydraulische Filter, mit mindestens einer Lage, umfassend zumindest eine erste Struktur (18, 24), die Kett- (32) und Schussfäden (36, 37) aufweist, und mindestens eine weitere, zweite Struktur (22) mit vorgebbarer Filtrationseigenschaft, wobei die jeweilige erste Struktur (18, 24) zumindest teilweise aus Multifilamenten in Form von gezwirnten Fäden (36) gebildet ist, **dadurch gekennzeichnet, dass** der jeweils gezwirnte Faden (36) aus mindestens einem Trägerfaden (34) gebildet ist, mit dem zumindest ein Karbonfaden (38) verzwirnt ist.

2. Filtermaterial nach Anspruch 1, **dadurch gekennzeichnet, dass**
- Schussfäden (36) und/oder
- Kettfäden (32),
- vorzugsweise ausschließlich Schussfäden (36),
mit Fäden (38) mit Karbonanteil verzwirnt sind.

3. Filtermaterial nach einem der vorstehenden Ansprüche, **dadurch gekennzeichnet, dass** der jeweilige Karbonfaden (38) zumindest teilweise karbonhaltige Materialien aufweist, vorzugsweise mit Karbon beschichtet ist, besonders bevorzugt vollständig aus Karbon besteht.

4. Filtermaterial nach einem der vorstehenden Ansprüche, **dadurch gekennzeichnet, dass** in vorgebbarer Hintereinanderabfolge von Kett-(32) und Schussfäden (36, 37) das Gewebe (18, 24) von gezwirnten, Karbonmaterialien (38) aufweisenden Fäden (36) oder von nicht gezwirnten, ausschließlich aus Karbon bestehenden oder Karbonmaterialien aufweisenden Fäden (42) durchgriffen ist.

5. Filtermaterial nach einem der vorstehenden Ansprüche, **dadurch gekennzeichnet, dass** bei der Hintereinanderabfolge die gezwirnten Fäden (36) immer den achten Schussfaden des Gewebes (18, 24) betreffen und einen an dieser Stelle an sich vorgesehenen, nicht gezwirnten Schussfaden (37) ersetzen

6. Filtermaterial nach einem der vorstehenden Ansprüche, **dadurch gekennzeichnet, dass** das Gewebe (18, 24) eine Leinwandbindung aufweist.

7. Filtermaterial nach einem der vorstehenden Ansprüche, **dadurch gekennzeichnet, dass** die Kettfäden (32) einen Durchmesser von 0,3 mm bis 0,35 mm aufweisen.

8. Filtermaterial nach einem der vorstehenden Ansprüche, **dadurch gekennzeichnet, dass** die Maschenweite der Schussfäden (36, 37) mindestens 0,2 mm, vorzugsweise 1,80 mm, beträgt, und die Maschenweite der Kettfäden (32) bei Ausgestaltung in Form von Rechteckmaschen 1,40 mm beträgt.

9. Filtermaterial nach einem der vorstehenden Ansprüche, **dadurch gekennzeichnet, dass** Schussfäden (36, 37) einen Durchmesser von 0,1 mm bis 0,26 mm aufweisen.

10. Filtermaterial nach einem der vorstehenden Ansprüche, **dadurch gekennzeichnet, dass** Kett- (32) und Schussfäden (36, 37) des Gewebes (18, 24) an zumindest einem Teil ihrer Kreuzungsstellen (40) miteinander verbunden sind.

11. Filtermaterial nach einem der vorstehenden Ansprüche, **dadurch gekennzeichnet, dass** das Gewebe (18, 24) mit der vorzugsweise durch einen Vliesstoff gebildeten zweiten Struktur (22) mittels Laminieren, Kaschieren und/oder mittels eines Aufschmelzverfahrens, wie Ultraschall, untereinander verbunden sind.

12. Filtermaterial nach einem der vorstehenden Ansprüche, **dadurch gekennzeichnet, dass** Kett- (32) und Schussfäden (36, 37) an Kreuzungsstellen (40) dadurch fixiert sind, dass das Gewebe (18, 24) mit dem Vliesstoff der zweiten Struktur (22), vorzugsweise mittels Ultraschall, verbunden ist.

13. Filterelement mit einem Filtermaterial (10) in einer Ausbildung gemäß einem der vorstehenden Ansprüche.

## Claims

1. Filter material, in particular intended for hydraulic filters, containing at least one layer, comprising at least a first structure (18, 24), which consists of warp (32) and weft fibres (36, 37), and at least one further, second structure (22) with predeterminable filtration characteristic, wherein the respective first structure (18, 24) is formed at least in part of multifilaments in the form of twisted fibres (36), **characterised in that** the individually twisted fibre (36) is formed from at least one carrier fibre (34), with which at least one carbon fibre (38) is twisted.

2. Filter material in accordance with claim 1, **characterised in that**
- weft fibres (36) and/or
- warp fibres (32),
- preferably exclusively weft fibres (36), are twisted with fibres (38) having a proportion of carbon

3. Filter material in accordance with one of the preceding claims, **characterised in that** the respective carbon fibres (38) at least comprise carbon-containing material, preferably are coated with carbon, particularly preferably consist completely of carbon.

4. Filter material in accordance with one of the preceding claims, **characterised in that**, in predeterminable successive sequence of warp (32) and weft fibres (36, 37), the fabric (18, 24) is penetrated by fibres (36) comprising twisted carbon materials (38) or by non-twisted fibres (42) consisting exclusively of carbon or carbon materials.

5. Filter material in accordance with one of the preceding claims, **characterised in that** in the sequence of one after the other, the twisted fibres (36) always relate to the eighth weft fibres of the fabric (18, 24) and replace the non-twisted (37) weft fibres provided at this position.

6. Filter material in accordance with one of the preceding claims, **characterised in that** the fabric (18, 24) comprises a plain weave.

7. Filter material in accordance with one of the preceding claims, **characterised in that** the warp fibres (32) have a diameter of 0.3 mm to 0.35 mm.

8. Filter material in accordance with one of the preceding claims, **characterised in that** the mesh width of the weft fibres (36, 37) is at least 0.2 mm, preferably 1.80 mm, and the mesh width of the warp fibres (32) with configuration in the form of rectangular stitches is 1.40 mm.

9. Filter material in accordance with one of the preceding claims, **characterised in that** weft fibres (36, 37) have a diameter of 0.1 mm to 0.26 mm.

10. Filter material in accordance with one of the preceding claims, **characterised in that** warp (32) and weft fibres (36, 37) of the fabric (18, 24) are joined together at at least at part of their intersection points (40).

11. Filter material in accordance with one of the preceding claims, **characterised in that** the fabrics (18, 24) are joined with the second structure (22), preferably formed by a non-woven material, by means of laminating, a laminated coating and/or by means of a fusion method, such as ultrasonics.

12. Filter material in accordance with one of the preceding claims, **characterised in that** warp (32) and weft fibres (36, 37) are fixed at intersection points (40) so that the fabric (18, 24) is joined to the non-woven material of the second structure (22), preferably by means of ultrasonics.

13. Filter element with a filter material (10) in a design in accordance with one of the preceding claims.

## Revendications

1. Matière filtrante, prévue notamment pour des filtres hydrauliques, ayant au moins une couche, comprenant au moins une première structure (18, 24), qui a des fils (32) de chaîne et des fils (36, 37) de trame, et au moins une autre deuxième structure (22), ayant des propriétés de filtration pouvant être données à l'avance, dans laquelle la première structure (18, 24) respective est formée, au moins en partie, de multifilaments sous forme de fils (36) retordus, **caractérisée en ce que** chaque fil (36) retordu est formé d'au moins un fil (34) support avec lequel est retordu au moins un fil (38) de carbone.

2. Matière filtrante suivant la revendication 1, **caractérisée en ce que**
- des fils (36) de trame et/ou
- des fils (32) de chaîne,
- de préférence, exclusivement des fils (36) de trame sont retordus avec des fils (38) ayant une proportion de carbone.

3. Matière filtrante suivant l'une des revendications précédentes, **caractérisée en ce que** chaque fil (38) de carbone comporte, au moins en partie, des matériaux contenant du carbone, en étant, de préférence, revêtu de carbone, en étant notamment, de préférence, complètement en carbone.

4. Matière filtrante suivant l'une des revendications précédentes, **caractérisée en ce que**, dans une succession l'une derrière l'autre pouvant être donnée à l'avance de fils (32) de chaîne et de fils (36, 37) de trame, le tissu (18, 24) est traversé par des fils (36) retordus ayant des matériaux (38) de carbone ou de fils (42) non retordus constitués exclusivement de carbone ou ayant des matériaux de carbone.

5. Matière filtrante suivant l'une des revendications précédentes, **caractérisée en ce que**, dans la succession les uns derrière les autres, les fils (36) retordus concernent toujours le huitième fil de trame du tissu (18, 24) et remplacent un fil (37) de trame non retordu prévu en soi à cet endroit.

6. Matière filtrante suivant l'une des revendications précédentes, **caractérisée en ce que** le tissu (18, 24) a une armure toile.

7. Matière filtrante suivant l'une des revendications précédentes, **caractérisée en ce que** les fils (32) de chaîne ont un diamètre de 0,3 mm à 0,35 mm.

8. Matière filtrante suivant l'une des revendications précédentes, **caractérisée en ce que** la grosseur de maille des fils (36, 37) de trame est d'au moins 0,2 mm, de préférence de 1,80 mm, et la grosseur de maille des fils (32) de chaîne, sous la forme de mailles rectangulaires, est 1,40 mm.

9. Matière filtrante suivant l'une des revendications précédentes, **caractérisée en ce que** les fils (36, 37) de trame ont un diamètre de 0,1 mm à 0,26 mm.

10. Matière filtrante suivant l'une des revendications précédentes, **caractérisée en ce que** les fils (32) de chaîne et les fils (36, 37) de trame du tissu (18, 24) sont reliés entre eux sur au moins une partie de leurs croisements (40).

11. Matière filtrante suivant l'une des revendications précédentes, **caractérisée en ce que** le tissu (18, 24) est relié à la deuxième structure (22) formée, de préférence, par un non tissé, au moyen d'un laminage, d'un doublage et/ou au moyen d'un procédé de fusion, comme par ultrasons.

12. Matière filtrante suivant l'une des revendications précédentes, **caractérisée en ce que** les fils (32) de chaîne et les fils (36, 37) de trame sont immobilisés à leurs croisements (40) par le fait que le tissu (18, 24) est relié au non tissé de la deuxième structure (22), de préférence, au moyen d'ultrasons.

13. Elément de filtre ayant une matière (10) filtrante suivant une constitution selon l'une des revendications précédentes.
